# EUROPÄISCHE PATENTSCHRIFT

(11) **EP 2 162 381 B1**
(45) Veröffentlichungstag und Bekanntmachung des Hinweises auf die Patenterteilung: **29.06.2016**
(21) Anmeldenummer: 08758526.1
(22) Anmeldetag: 15.05.2008
(51) Int. Cl.: B67C 3/00, B67C 3/24, B65G 29/00, B65G 17/32

(54) **BEHANDLUNGSMASCHINE**
TREATMENT MACHINE
MACHINE DE TRAITEMENT

(30) Priorität: 22.05.2007 DE 102007024102
(43) Veröffentlichungstag der Anmeldung: 17.03.2010
(73) Patentinhaber: KHS GmbH, 44143 Dortmund (DE)
(72) Erfinder: CLÜSSERATH, Ludwig, 55543 Bad Kreuznach (DE); BRUCH, Bernd, 55595 Weinsheim (DE)
(86) Internationale Anmeldenummer: PCT/EP2008/003882
(87) Internationale Veröffentlichungsnummer: WO 2008/141761

(56) Entgegenhaltungen:
- WO-A-2006/077050
- WO-A-2007/118607
- DE-A1- 3 143 511
- DE-A1- 10 340 365
- JP-A- 2005 035 669

## Beschreibung

Die Erfindung bezieht sich auf eine Behandlungsmaschine gemäß Oberbegriff des Patentanspruchs 1 oder 11.

Behandlungsmaschinen für Behälter, insbesondere auch für Flaschen sind in unterschiedlichster Form bekannt, speziell auch als Füllmaschinen umlaufender Bauart mit einer Vielzahl von an dem Umfang eines Rotors gebildeten Behandlungsstationen in Form von Füllstationen, an denen die Behälter während des Füllens mit einem flüssigen Füllgut jeweils unter einem als Füllelement ausgebildeten Behandlungskopf an einem Behälterträger hängend gehalten sind. Letzterer ist hierfür beispielsweise gabelartig oder mit einer zum Umfang des Rotors hin offenen Behälteraufnahme oder Aufnahmeöffnung ausgebildet, und zwar derart, dass der jeweilige Behälter mit einem im Bereich der Behältermündung ausgebildeten Behälter- oder Halsflansch auf dem Behälterträger hängend aufliegt. Für diese hängende Befestigung der Behälter ist es wesentlich, dass die jeweilige Aufnahmeöffnung hinsichtlich Form und/oder Größe an die Form und/oder Größe, d.h. an den Durchmesser angepasst ist, die bzw. den die Behälter im Bereich ihres Behälterflansches aufweisen.

Auch bei anderen an Behandlungsmaschinen vorgesehenen Behälteraufnahmen, die mit den an der jeweiligen Behandlungsstation vorgesehenen Behältern tragend und/oder stützend zusammenwirken, ist es notwendig, dass diese in ihrer Form und/oder Größe an die Form und/oder Größe angepasst sind, die die zu verarbeitenden Behälter an ihren mit der jeweiligen Behälteraufnahme zusammenwirkenden Bereich(en) ihrer Umfangsfläche aufweisen.

Bei einer Umstellung einer Behandlungsmaschine von einer Behälterart auf eine andere Behälterart (Behälterwechsel), die an den mit dem Behälteraufnahmen zusammenwirkenden Bereichen eine geänderte Form und/oder Größe, d.h. einen geänderten Durchmesser aufweisen, ist ebenfalls ein Formatwechsel erforderlich, d.h. die bis dahin verwendeten Behälteraufnahmen müssen durch an die nach dem Behälterwechsel verwendeten Behälter angepasst werden.

Bekannt ist (WO 03/070579A1, US 5 778 633) bei einem Formatwechsel die Behälteraufnahmen sämtlicher Behandlungsstationen auszutauschen, was sehr arbeitsintensiv und zeitaufwendig ist und besonders nachteilig lange Stillstandzeiten für die jeweilige Behandlungsmaschine bedeutet.

Bekannt ist weiterhin auch aus der DE 103 40 365 A1, bei einer Füllmaschine umlaufender Bauart an einem die vertikale Maschinenachse konzentrisch umschließenden ringförmigen Behälterträger für jede Behandlungs- bzw. Füllstation zwei Aufnahmeöffnungen unterschiedlicher Größe für jeweils eine hängende Halterung von Behältern vorzusehen, und zwar derart, dass sich diese Behälter mit ihrem Behälterflansch im Bereich der jeweiligen Aufnahmeöffnung an dem ringförmigen Behälterträger abstützen. Für einen Behälterwechsel sind den Behandlungs- oder Füllstationen zugeordneten Behälteraufnahmeöffnungen durch eine Wechsel- oder Schwenkbewegung des ringförmigen Behälterträgers um die vertikale Maschinenachse gleichzeitig an allen Behandlungs- bzw. Füllstationen zwischen einer Bereitstellungsposition und einer Arbeitsposition bewegbar, in der sich die betreffende Aufnahmeöffnung und damit der an dieser Aufnahmeöffnung vorgesehene Behälter in der für das Füllen notwendigen Position unterhalb des zugehörigen Behandlungskopfes bzw. Füllelementes befindet.

Eine vergleichbare Vorrichtung zeigt die WO 2006/077050 A1, bei welcher an einer Behandlungsposition bzw. Halteposition für Flaschen je ein Paar unterschiedlich großer Halteelemente angeordnet sind, die je nach Hals- bzw. Neckringgröße der Flaschen in Eingriff gebracht werden können. Hierbei wird die Winkelposition des tragenden Sterns oder der Füllmaschine im Übergabe- bzw. Übernahmepunkt entsprechend verändert, um entweder die eine oder die andere Gruppe der Halteelemente in Eingriff zu bringen. Nachteilig hierbei ist aber, dass speziell dann, wenn die Behandlungsstationen am Umfang des Rotors sehr dicht aufeinander folgend vorgesehen sind, was für eine angestrebte hohe Leistung unerlässlich ist, die Anzahl der jeder Behandlungsstation zugeordneten unterschiedlichen Aufnahmeöffnungen begrenzt ist, d.h. eine Umstellung der Behandlungsmaschine allenfalls zur Anpassung an zwei unterschiedliche Behältertypen oder-größen möglich ist.

Weiterhin sind rotierbare Halteräder oder Teilräder bekannt, welche als Rad oder Teilscheibe ausgeformt sind und an jeder Bearbeitungs- oder Halteposition für Flaschen am Umfang eines Transportsterns oder einer Behandlungsmaschine vorgesehen sind. Diese Halteräder sind mittels einer vertikalen Achse gelagert, um welche diese gedreht werden können. Sie weisen Haltetaschen mit unterschiedlichen Teilradien auf, die bedarfsweise in Eingriff gebracht werden können (WO 2007/118607 A1 (am 25.10.2007 veröffentlich und nach Artikel 54(3) EPÜ Stand der Technik), DE 31 43 511 A1).

Nachteilig an dieser Vorrichtung ist allerdings, dass diese auf dem Umfang des tragenden Transportsterns oder der Behandlungsmaschine, einen bedeutsamen zusätzlichen Umfang erfordern und somit insgesamt zu großen Bauabmessungen oder Leistungseinbußen führen.

Bekannt ist weiterhin eine Behälterbehandlungsmaschine (JP 2005 035669 A) mit den Merkmalen des Oberbegriffs des Patentanspruchs 1 bzw. 11. Bei dieser bekannten Behälterbehandlungsmaschine weist jede Behandlungsposition, die am Umfang eines um eine vertikale Maschinenachse umlaufend antreibbaren Rotors vorgesehen ist, zwei jeweils eine Behälteraufnahme bildende greiferartige Behälterträger auf. Für einen Formatwechsel sind die beiden der jeweiligen Behandlungsstation zugeordneten und mit ihren Behälteraufnahmen an unterschiedliche Behältergrößen und/oder Formen angepassten Behälterträger gesteuert und eine tangential zur Drehbewegung des Rotors orientierte horizontale Achse zwischen zwei Betriebszuständen derart schwenkbar, dass in jedem Betriebszustand jeweils ein Behälterträger in einer aktivierten Stellung zum Halten eines Behälters und der andere Behälterträger in einer nicht aktivierten Stellung seitlich von der Bewegungsbahn angeordnet ist, auf der sich die Behälter bei umlaufendem Rotor bewegen. Das Schwenken der Behälterträger erfolgt bei dieser Behälterbehandlungsmaschine durch ein Formatwechselelement in Form eines Schwenkantriebs. Allein schon durch das Schwenken der Behälterträger, durch den hierfür erforderlichen Schwenkantrieb und dessen Ansteuerung sowie durch die Notwendigkeit, den in der aktiven Stellung befindlichen Behälterträger dort zu verriegeln, ist die bekannte Behälterbehandlungsmaschine konstruktiv aufwendig und auch störanfällig.

Aufgabe der Erfindung ist es, eine Behandlungsmaschine aufzuzeigen, die die vorgenannten Nachteile des Standes der Technik vermeidet. Zur Lösung dieser Aufgabe ist eine Behandlungsmaschine entsprechend dem Patentanspruch 1 oder 11 ausgebildet.

Bei der erfindungsgemäßen Behandlungsmaschine sind die Formatwechselelemente, die zur Anpassung an die unterschiedliche Größe und/oder Behälterform dienen so beweglich, dass deren den Formatwechsel bewirkende Abschnitte sich in der nicht aktiven Stellung seitlich von der Bewegungsbahn befinden, auf welcher die die Behälter tragenden Behälterträger bewegt werden, so dass die Formatwechselelemente oder deren den Formatwechsel bewirkende Abschnitte in ihrem nicht aktiven Zustand keinen Platz zwischen zwei in Bewegungsrichtung des Transportelementes, d.h. beispielsweise in Drehrichtung des Rotors aufeinander folgenden Behandlungsstationen oder zwischen zwei Behälterträgern in Anspruch nehmen, der Abstand der Behälterträger und damit auch der Behandlungsstationen in Transportrichtung des Transportelementes also sehr klein gehalten werden kann und hierdurch Behandlungsmaschinen mit hoher Leistung ermöglicht werden.

Bei einer Ausführungsform der Erfindung sind die Formatwechselelemente senkrecht oder im Wesentlichen senkrecht zur Bewegungsrichtung des Transportelementes, d.h. bei Ausbildung des Transportelementes als um eine Maschinenachse umlaufend angetriebener Rotor radial oder im Wesentlichen radial zur Maschinenachse beweglich bzw. verschiebbar. Hierbei sind die Formatwechselelemente dann an ihrem den Formatwechsel bewirkenden Abschnitt z.B. jeweils mit einer Behälteraufnahme ausgebildet, die bei aktivem Formatwechselelement innerhalb einer an einem Tragstück des jeweiligen Behälterträgers ausgebildeten oder vorgesehenen Ausnehmung angeordnet ist oder diese überlappt, so dass bei aktivem Formatwechselelement dessen Behälteraufnahme die eigentliche Behälteraufnahme des jeweiligen Behälterträgers bildet, während bei nicht aktivem Formatwechselelement die am Tragstück des jeweiligen Behälterträgers gebildete Behälteraufnahme zur Aufnahme der Behälter dient.

Bei einer weiteren Ausführungsform der Erfindung ist das Formatwechselelement von einem um eine Achse senkrecht zur Transportrichtung des Transporteurs drehbaren Element, beispielsweise einer Wechselscheibe gebildet. Am Umfang dieses Elementes sind dann wenigstens zwei unterschiedliche, an jeweils unterschiedliche Behältergrößen und/oder Formen angepasste Behälteraufnahmen gebildet.

"Behälter mit unterschiedlicher Behältergröße und/oder Form" sind im Sinne der Erfindung insbesondere Flaschen oder dergleichen Behälter, die einen unterschiedlichen Durchmesser, speziell auch an ihrem Behälter- oder Flaschenhals aufweisen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
Fig. 1 in vereinfachter Darstellung eine Draufsicht auf einen um eine vertikale Maschinenachse in Richtung des Pfeils A umlaufend antreibbaren Rotor einer Behandlungsmaschine mit einer Vielzahl von Behälteraufnahmen am Umfang des Rotors;
Fig. 2 in schematischer Darstellung einen Schnitt durch den Rotor;
Fig. 3 in verschiedenen Positionen a - e sowie a' - e' eine Behandlungsstation einer Behandlungsmaschine umlaufender Bauart in unterschiedlichen Betriebszuständen;
Fig. 4 in vereinfachter Darstellung eine Behandlungsstation einer Behandlungsmaschine, beispielsweise Füllmaschine zusammen mit einem zugehörigen Behälterträger;
Fig. 5 in vereinfachter Darstellung eine Draufsicht auf den Behälterträger der Behandlungsstation der Figur 4.

In den Figuren ist 1 ein um eine vertikale Maschinenachse in Richtung des Pfeils A umlaufend antreibbarer Rotor einer Behälterbehandlungsmaschine, beispielsweise einer Füllmaschine zum Füllen von Behältern bzw. Flaschen mit einem flüssigen Füllgut.

Der Rotor 1 ist Bestandteil einer Behälter- bzw. Flaschenbehandlungsmaschine, mit der Flaschen mit unterschiedlichem Halsdurchmesser behandelt, beispielsweise mit einem flüssigen Füllgut befüllt werden können, so z.B. die Flaschen 2a, die an ihrem die Flaschenmündung 2.1 aufweisenden Flaschenhals einen größeren Durchmesser, beispielsweise einen Durchmesser von 38 mm aufweisen, oder aber Flaschen 2b, die an ihrem die Flaschenmündung 2.1 aufweisenden Flaschenhals einen reduzierten Durchmesser besitzen, z.B. einen Durchmesser von 28 mm.

Am Umfang des Rotors 1 sind mehrere Behälterträger 3 gebildet, an denen die Behälter bzw. Flaschen 2a bzw. 2b jeweils an einem unterhalb der Flaschenmündung 2.1 gebildeten Flansch 2.2 während der Behandlung, beispielsweise während des Füllens hängend gehalten sind.

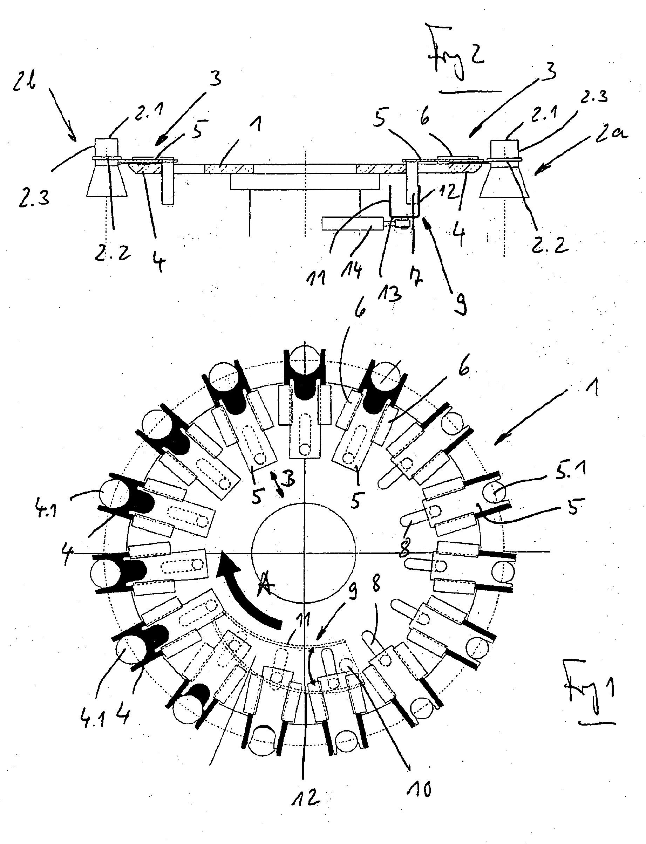

Die Behälterträger 3 bestehen hierfür bei der Ausführung der Figuren 1 und 2 aus einem fest an dem Rotor 1 befestigten Tragstück 4, das mit einem eine Ausnehmung bzw. eine gabelartigen Behälteraufnahme 4.1 aufweisenden Abschnitt über den Umfang des Rotors 1 wegsteht, die (Behälteraufnahme 4.1) bezogen auf die Maschinenachse MA radial außen offen ist. Jede Behälteraufnahme 4.1 ist dabei so geformt, dass sie eine Flasche 2a mit dem größeren Halsdurchmesser, beispielsweise mit einem Halsdurchmesser von 38 mm unterhalb des Flansches 2.2 Ober einen Umfangsbereich von wenigstens 180° aufnehmen kann, sodass die betreffende Flasche 2a zuverlässig hängend an der Behälteraufnahme 4.1 gehalten ist und der Flaschenhals 2.3 sowie auch der dortige Flansch 2.2 nicht über die bezogen auf die Maschinenachse MA radial außen liegende Seite des Trägers 4 vorstehen.

Um auch die Flaschen 2b mit dem reduzierten Durchmesser am Flaschenhals 2.3 behandeln zu können, weist jeder Behälterträger 3 ein schieberartiges Formatwechselelement 5 auf, welches plattenförmig ausgebildet und mit ihren Oberflächenseiten in Ebenen senkrecht zur Maschinenachse MA angeordnet ist. An dem bezogen auf die Maschinenachse MA außen liegenden Ende bildet das Formatwechselelement 5 eine der Behälteraufnahme 4.1 entsprechende Behälteraufnahme 5.1, allerdings mit kleineren Abmessungen.

Jedes Formatwechselelement 5 ist oberhalb eines Tragstücks 4 radial zur Maschinenachse MA zwischen einer nicht wirksamen Stellung, in der die Behälteraufnahme 5.1 außerhalb der Behälteraufnahme 4.1 des zugehörigen Tragstücks 4 und dabei gegenüber der Behälteraufnahme 4.1 in Richtung zur Maschinenachse MA versetzt angeordnet ist, und einer wirksamen Stellung bewegbar (Doppelpfeil B), in der das Formatwechselelement 5 mit seinem bezogen auf die Maschinenachse MA radial außen liegenden Ende bis an das dortige Ende des Tragstücks 4 reicht und so mit dem die Behälteraufnahme 5.1 aufweisenden Ende das die Behälteraufnahme 4.1 des Tragstücks 4 aufweisende Ende abdeckt, d.h. die Behälteraufnahme 5.1 in diesem wirksamen bzw. aktiven Zustand die zur hangenden Halterung der Flaschen 2b dienende gabelförmige Behälteraufnahme des Behälterträgers 3 bildet.

Für die radiale Bewegung der Formatwechselelemente 5 zwischen der nicht wirksamen Position und der wirksamen Position sind an der Oberseite des Rotors 1 Führungen 6 gebildet, in denen die diese Formatwechselelemente 5 bildenden rechteckförmigen Platten an ihren sich radial oder in etwa radial zur Maschinenachse MA erstreckenden Plattenlängsseiten geführt ist. Jedes Formatwechselelement 5 besitzt an seinem radial innen liegenden Ende weiterhin einen Bolzen 7, der mit seiner Achse parallel zur Maschinenachse MA orientiert ist und jeweils durch ein im Rotor 1 vorgesehenes und mit seiner Längserstreckung radial zur Maschinenachse MA verlaufendes Langloch 8 hindurchreichend über die Unterseite des Drehtisches bzw. Rotors 1 vorsteht.

An einem mit dem Rotor 1 nicht umlaufenden Maschinengestell der Behandlungsmaschine ist eine mit den Bolzen 7 zusammenwirkende Schaltkurve 9 vorgesehen, die mittels eines Gelenkes 10 um eine Achse parallel zur Maschinenachse MA schwenkbar ist. Die Schaltkurve 9 ist bei der dargestellten Ausführungsform von einem an der Oberseite offenen U-Profil mit zwei Schenkeln 11 und 12 und einem diese Schenkel miteinander verbindenden Jochabschnitt ausgebildet. Die beiden in vertikaler Richtung orientierten Schenkel 11 und 12 bilden mit ihren einander zugewandten Seiten Führungs- oder Schaltflächen für die Bolzen 7 und besitzen jeweils im Bezug auf die Maschinenachse MA einen spiralförmigen Verlauf insbesondere auch so, dass der Abstand der beiden Schenkel 11 und 12 an dem bezogen auf die Drehrichtung A vorderen Ende der Schaltkurve 9 wenigstens gleich der Länge der Langlöcher 8 und damit wenigstens gleich dem Bewegungshub der Formatwechselelemente 5 zwischen ihrer nicht wirksamen und Ihrer wirksamen Position ist, während an dem im Bezug auf die Drehrichtung A hinteren Ende der Schaltkurve 8 der Abstand der Schenkel 11 und 12 in etwa gleich oder geringfügig größer ist als der Durchmesser der Bolzen 7. Die Anordnung ist weiterhin so getroffen, dass sich das fordere, offene Ende der Schaltkurve 9 unterhalb der Bewegungsbahn der Langlöcher 8 befindet. Durch Schwenken der Schaltkurve 9 um die Achse des Gelenks 10 kann das hintere, offene Ende der Schaltkurve 9 wahlweise unter der Bewegungsbahn des radial Innen liegenden Endes der Langlöcher 8 für ein Zurückführen der Formatwechselelemente 5 in ihre nicht wirksame Stellung oder aber unter der Bewegungsbahn des radial außen liegenden Endes der Langlöcher 8 positioniert werden, und zwar für ein Überführen der Formatwechselelemente 5 in ihre wirksame Position. Für das Schwenken der Schaltkurve 9 ist ein Betätigungselement in Form einer Kolben-Zylinder-Anordnung 14 vorgesehen, beispielsweise in Form eines Hydraulikzylinders.

Das Umstellen der Behälteraufnahmen 3 von den Flaschen 2a auf die Flaschen 2b bzw. umgekehrt erfolgt durch entsprechendes Schwenken der Schaltkurve 9 durch das Betätigungselement 14 und durch Drehen des Rotors 1 um wenigstens eine volle Umdrehung, d.h. bei der Umstellung (Formatwechsel) auf die Flaschen 2a wird die Steuerkurve mit Ihrem bezogen auf de Drehrichtung A rückwärtigen Ende in Richtung Maschinenachse MA und bei einem Umstellen (Formatwechsel) der Behälterträger auf die Flaschen 2b bezogen auf die Maschinenachse MA radial nach außen geschwenkt.

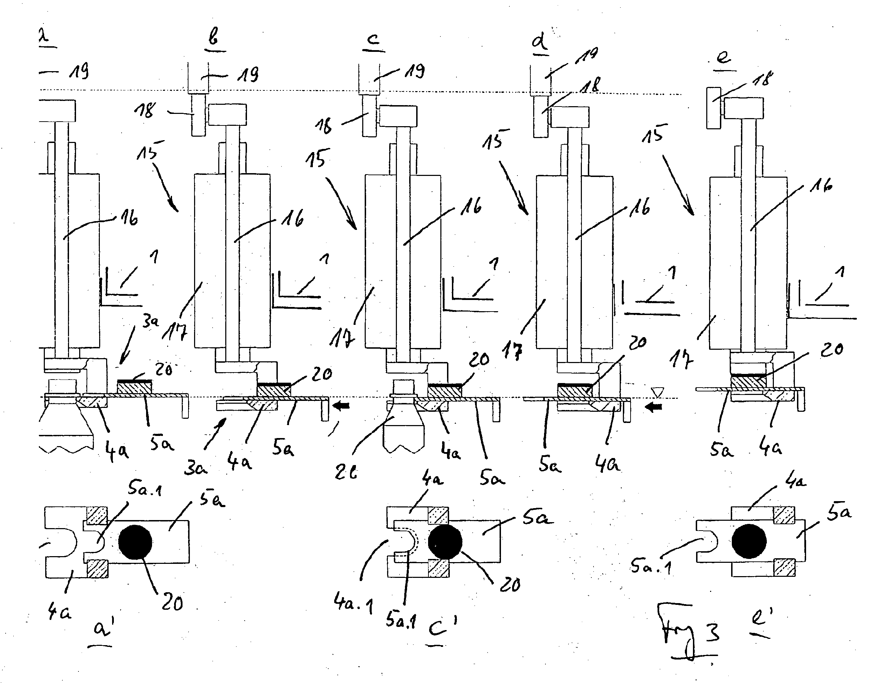

Die Figur 3 zeigt in verschiedenen Positionen bzw. in verschiedenen Betriebszuständen eine Behandlungsstation 15, die als Füllstation zum Füllen der Behälter bzw. Flaschen 2a und 2b mit einem flüssigen Füllgut ausgebildet und mit einer Vielzahl gleichartiger Stationen am Umfang eines um eine vertikale Maschinenachse umlaufend antreibbaren Rotors 1 vorgesehen ist. Jede Behandlungsstation 16 besteht bei dieser Ausführungsform aus einem Behälterträger 3a, der wiederum zum hängenden Halten der Flaschen 2a mit dem größeren Halsdurchmesser oder der Flaschen 2b mit dem kleineren Halsdurchmesser ausgebildet ist. Der Behälterträger 3a besteht aus einem dem Tragstück 4 entsprechenden Tragstück 4a mit einer den Flaschen 2a mit dem größeren Halsdurchmesser angepassten gabelartigen Behälteraufnahme 4a.1 sowie aus einem wiederum als Schieber ausgebildeten und dem Formatwechselelement 5 entsprechenden Formatwechselelement 5a, das die der Behälteraufnahme 5.1 entsprechende gabelförmige Behälteraufnahme 5a.1 für die Flaschen 2b mit dem kleineren Halsdurchmesser bildet. Das Formatwechselelement 5a ist verschiebbar Tragstück 4 bzw. am Behälterträger 3 gehalten.

Abweichend von der Ausführungsform der Figuren 1 und 2 ist zunächst, dass der Behälterträger 3a mit seinem Tragstück 4a und Formatwechselelement 5a nicht starr, sondern höhenbeweglich oder-verstellbar am Rotor 1 vorgesehen ist. Hierfür ist der Behälterträger 3a am unteren Ende eines Gestänges 16 befestigt, welches beispielsweise an einem für jede Behandlungsstation 15 am Rotor 1 vorgesehenen Füllelement 17 in vertikaler Richtung verschiebbar geführt und durch nicht dargestellte Federelemente in eine obere Hubstellung vorgespannt ist. Am oberen Ende des Gestänges 16 ist eine Kurvenrolle 18 frei drehbar vorgesehen, die mit einer Steuerkurve 19 zusammenwirkt, und zwar derart, dass entsprechend dem Verlauf der mit dem Rotor 1 nicht umlaufenden Steuerkurve 19 der Behälterträger 3 gegen die Wirkung der auf das Gestänge 16 einwirkenden Federmittel abgesengt bzw. durch diese Federmittel angehoben wird.

Unterschiedlich von der in den Figuren 1 und 2 dargestellten Ausführungsform ist weiterhin auch, dass auf der Oberseite des Formatwechselelementes 5a bzw. des dieses Element bildenden Schiebers eine das Füllelement 17 an seiner dem Behälterträger 3a gegenüberliegenden Abgabeöffnung verschließende CIP- oder Verschließplatte 20 vorgesehen ist. Der das Formatwechselelement 5a bildende Schieber kann wenigstens drei Zustände bzw. Stellungen einnehmen, und zwar
➢ die in den Positionen a und a' der Figur 3 dargestellte nicht wirksame Stellung, in der das Formatwechselelement 5a mit seinem die Behälteraufnahme 5a.1 aufweisenden Ende soweit zurückbewegt ist, dass lediglich die Behälteraufnahme 4a.1 zum Haft der Flaschen 2a an ihrem Flaschenhals 2.3 wirksam ist,
➢ die in der Position c in Figur 3 dargestellte Stellung, in der das Formatwechselelement 5a mit seinem die Behälteraufnahme 5a.1 aufweisenden Ende das Tragstück 4a im Bereich seiner Behälteraufnahme 4a.1 zumindest teilweise abdeckt, sodass die Flaschen 2b mit dem reduzierten Halsdurchmesser an dem Behälterträger 3a hängend gehalten werden können, und
➢ die in der Position e in Figur 3 dargestellte Stellung, in der sich die Verschlussplatte 20 unterhalb der Abgabeöffnung des Füllelementes 17 befindet und in der durch Anheben des Behälterträgers 3a die Verschließplatte 20 dicht gegen das Füllelement angepresst ist, und zwar zum Abdichten des Füllelementes 17 an seiner Abgabeöffnung für eine Reinigung und/oder Sterilisation (CIP-Reinigung und/oder-Sterilisation).

Wie sich aus den Positionen a - c der Figur 3 ergibt, erfolgt die Behälterumstellung nicht nur durch Verschieben des Formatwechselelementes 5a, sondern zugleich auch unter Absenken des Behälterträgers 3a um einen Betrag, der der Dicke des das Formatwechselelement 5a bildenden Schiebers entspricht, sodass die sogenannte "Neckhöhe", d.h. das Niveau der Anlagefläche beibehalten wird, gegen die die Unterseite des Halsringes oder Flansches 2.2 aufliegt. Das Verstellen bzw. das Absenken des Behälterträgers 3 erfolgt durch eine Höhenverstellung der Steuerkurve 19.

Die Steuerung der Formatwechselelemente 5a erfolgt beispielsweise wiederum über die Nocken bzw. Bolzen 7 und Ober eine der Schaltkurve 9 entsprechenden Schaltkurve, die dann aber drei definierte Schwenkstellungen einnehmen kann. Auch andere Mittel zum Betätigen des jeweiligen Formatwechselelementes 5 bzw. 5a sind denkbar.

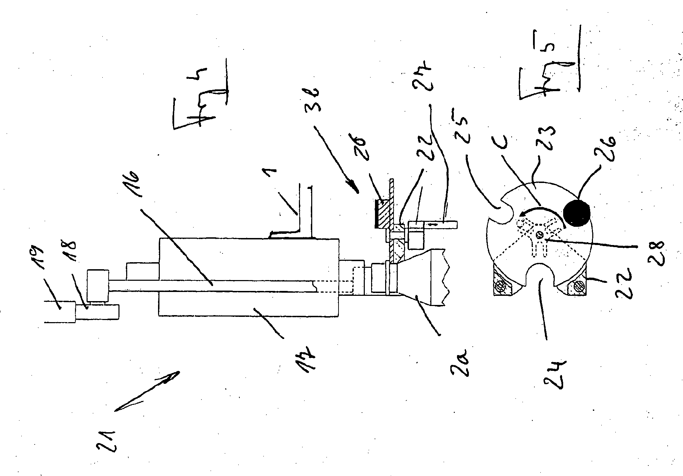

Die Figuren 4 und 5 zeigen als weitere Ausführungeform eine Behandlungsstation 21, die wiederum als Füllstation zum Füllen der Behälter bzw. Flaschen 2a und 2b mit dem flüssigen Füllgut ausgebildet und zusammen mit mehreren gleichartigen Füllstationen beispielsweise an dem Umfang des Rotors 1 vorgesehen ist. Die Behandlungsstation 21 unterscheidet sich von der Behandlungsstation 15 im Wesentlichen nur dadurch, dass anstelle des Tragstückes 4a mit der Behälteraufnahme 4a.1 und anstelle des Formatwechselelementes 5a mit der Behälteraufnahme 5a.1 am unteren Ende des Gestänges 16 ein Tragstück 22 vorgesehen ist, an welchem um eine vertikale Achse bzw. um eine Achse parallel zur Maschinenachse MA eine Wechselscheibe 23 drehbar vorgesehen ist. Am Umfang der Wechselscheibe 23 sind in gleichmäßigen Winkelabständen verteilt eine die Behälteraufnahme 24 für die Flaschen 2a bzw. deren Flaschenhals 2.3 bildende Ausnehmung, eine die Behälteraufnahme 25 für die Flaschen 2b bzw. deren Flaschenhals 2.3 bildende Ausnehmung und eine Verschlussplatte 26. Die Wechselscheibe 23 ist antriebsmäßig mit einem mit einem Schaltnocken 27 zusammenwirkenden Schaltstern 28 verbunden.

Bei einer Behandlungsmaschine mit einer Vielzahl von Behandlungsstationen 21 an einem umlaufenden Maschinenelement oder Rotor 1 ist der Schaltnocken 27 z.B. an einem mit dem Rotor 1 nicht mitbewegten Teil des Maschinengestells vorgesehen und zwischen einer nicht wirksamen und einer wirksamen Stellung derart steuerbar, dass er sich in der nichtwirksamen Stellung außerhalb der Bewegungsbahn der Schaltsterne 28 der Behandlungsstationen 21 befindet und in einer wirksamen Stellung in die Bewegungsbahn der Schaltsterne 28 derart hineinreicht, dass immer dann, wenn sich eine Behandlungsstation 21 an dem in der wirksamen Stellung befindlichen Schaltnocken 27 vorbeibewegt, die Wechselscheibe 23 dieser Station um eine Teilung weitergedreht wird, wie dies in der Figur 5 mit dem Pfeil C angedeutet ist. Durch Aktivieren des Schaltnockens 27 und durch eine entsprechende Anzahl von Drehungen des Rotors 1 ist somit zeitlich nach einander sowohl ein Formatwechsel sämtlicher Behandlungsstationen 21 der Behandlungs- bzw. Füllmaschine, als auch eine Positionierung der jeweiligen Verschlussplatte 26 unter dem Füllelement 17 bzw, dessen Abgabebereich möglich.

### Bezugszeichenliste

- 1: Rotor
- 2,2a: Flasche
- 2.1: Flaschenmündung
- 2.2: Halsflansch
- 2.3: Flaschenhals
- 3, 3a, 3b: Behälterträger
- 4,4a: Tragstück
- 4.1, 4a.1: Ausnehmung oder Behälteraufnahme
- 5, 5a: Schieber oder Formatwechselelement
- 5a.1: Behälteraufnahme bzw. Ausnehmung
- 6: Führung
- 7: Schaltbolzen
- 8: Langloch
- 9: Schaltkurve
- 10: Gelenk
- 11, 12: Schenkel
- 13: Jochabschnitt
- 14: Betätigungselement
- 15: Behandlungsstation
- 16: Gestänge
- 17: Füllelement
- 18: Steuerrolle
- 19: Steuerkurve
- 20: Verschließplatte
- 21: Behandlungsstation
- 22: Tragstück
- 23: Wechselscheibe
- 24, 25: Behälteraufnahme oder Ausnehmung
- 26: Verschlussplatte
- 27: Schaltarm
- 28: Schaltstern
- A: Drehrichtung des Rotors 1
- B: Bewegung des Schiebers 5 bzw. 5a
- C: Drehrichtung der Wechselscheibe 23

## Patentansprüche

1. Behandlungsmaschine für Flaschen oder dergleichen Behälter (2a, 2b) mit wenigstens einem Transportelement (1), das als ein um eine vertikale Maschineachse (MA) umlaufend antriebarer Rotor (1) ausgebildet ist, mit mehreren am Transportelement (1) vorgesehenen Behandlungsstationen (15) mit Behälterträgern (3, 3a), die die Behälter (2a, 2b) mit an Tragstücken (4, 4a) gebildeten Behälteraufnahmen (4.1, 4a.1) jeweils an einem Behälterbereich, beispielsweise an einem Behälterhals (2.3) unterhalb eines dortigen Flansches (2.2), gabelartig übergreifend ausgebildet und für einen Formatwechsel an unterschiedliche Behältergrößen und/oder Formen anpassbar sind,
wobei zur Anpassung des jeweiligen Behälterträgers (3, 3a) an unterschiedliche Behältergrößen und/oder Formen jeweils ein bewegliches Formatwechselelement (5, 5a) vorgesehen ist, welches mit einem den Formatwechsel bewirkenden Abschnitt (5.1, 5a.1) zwischen einer aktiven und nicht aktiven Stellung bewegbar ist und hierfür in einer Achsrichtung senkrecht zur Bewegungsrichtung des Transportelementes und radial zur Maschinenachse (MA) beweglich, beispielsweise verschiebbar, ausgebildet ist, so dass der den Formatwechsel bewirkende Abschnitt (5.1, 5a.1) in seiner nicht aktiven Stellung seitlich von einer Bewegungsbahn angeordnet ist, auf der sich die die Behälter (2a, 2b) tragenden Behälterträger (3, 3a) bewegen, wobei
jeder Behälterträger (3, 3a) an seinem Tragstück (4, 4a) die an eine erste Behältergröße und/oder -form angepasste Behälteraufnahme (4.1, 4a.1) bildet, und
das Formatwechselelement (5, 5a) im aktiven Zustand diese Behälteraufnahme (4.1, 4a.1) für den Formatwechsel an eine von der ersten Behältergröße und/oder -form abweichende Behältergröße und/oder -form anpasst, und wobei der den Formatwechsel bewirkende Abschnitt des Formatwechselelementes (5, 5a) eine Behälteraufnahme (5.1, 5a.) bildet, die an eine von der ersten abweichenden Behältergröße und/der -form angepasst ist, **dadurch gekennzeichnet, dass** die Behälteraufnahme (5.1, 5a.1) des im aktiven Zustand befindlichen Formatwechselelementes (5, 5a) innerhalb der vom Tragstück (4, 4a) gebildeten Aufnahme (4.1, 4a.1) und/oder diese überlappend angeordnet ist.

2. Behandlungsmaschine nach Anspruch 1, **dadurch gekennzeichnet, dass** die an dem Formatwechselelement (5, 5a) vorgesehene Behälteraufnahme (5.1, 5a.1) gegenüber der am Tragstück (4, 4a) vorgesehenen Behälteraufnahme (4.1, 4a.1) reduzierte Abmessungen aufweist bzw. eine in den Abmessungen reduzierte Aufnahmeöffnung bildet.

3. Behandlungsmaschine nach Anspruch 1 oder 2, **dadurch gekennzeichnet, dass** das Formatwechselelement (5, 5a) wenigstens ein am Transportelement (1) und/oder am Behälterträger (3, 3a) und/oder am dortigen Tragstück (4, 4a) verschiebbar geführter Schieber ist.

4. Behandlungsmaschine nach einem der vorhergehenden Ansprüche, **dadurch gekennzeichnet, dass** bei Ausbildung der Behandlungsstationen (15) mit jeweils einem Füllelement (17) zum Füllen der Behälter (2a, 2b) mit einem flüssigen Füllgut das jeweilige Formatwechselelement (5a) als Verchließelement zum Verschließen des zugehörigen Füllelementes (17) und/oder einen Abgabebereich des Füllelementes (17) in einem Reinigungs- und/oder Sterilisationsbetrieb, z.B. Chip-Reinigung oder-Sterilisation ausgebildet ist.

5. Behandlungsmaschine nach Anspruch 4, **dadurch gekennzeichnet, dass** am Formatwechselelement (5a) eine Verschlusskappe oder Verschlussplatte ausgebildet ist.

6. Behandlungsmaschine nach einem der vorhergehenden Ansprüche, **gekennzeichnet durch** Steuermittel (9, 14, 18) zum gesteuerten Bewegen der Formatwechselelemente (5. 5a) zumindest zwischen der aktiven und nicht aktiven Position, vorzugsweise zwischen der aktiven, nicht aktiven und verschließenden Position.

7. Behandlungsmaschine nach Anspruch 6, **dadurch gekennzeichnet, dass** die Steuermittel zum gesteuerten Bewegen der Formatwechselelemente (5, 5a, 23) zumindest zwischen der aktiven und nicht aktiven Position von wenigstens einen an einem mit dem Transportelement (1) nicht bewegten Teil der Behandlungsmaschine vorgesehenen Schaltelement, beispielsweise in Form einer Schaltkurve (9) gebildet sind, und dass das Schaltelement (9) ein gesteuertes Bewegen der Formatwechselelemente (5, 5a) bewirkt, wenn sich diese mit dem Transportelement (1) am Schaltelement vorbei bewegen.

8. Behandlungsmaschine nach einem der vorhergehenden Ansprüche, **dadurch gekennzeichnet, dass** die Behälterträger (3a) zusammen mit dem jeweiligen Formatwechselelement (5a) höhenverstellbar, beispielsweise gesteuert höhenverstellbar am Transportelement (1) vorgesehen sind.

9. Behandlungsmaschine nach Anspruch 8, **dadurch gekennzeichnet, dass** die Behälterträger (3a) derart höhenverstellbar sind, dass ein Formatwechsel ohne Änderung des Höhenniveaus eines für die Behandlung wesentlichen Behälterbereichs, beispielsweise ohne Änderung des Höhenniveaus der Behältermündung (2.1) und/oder eines an einem Behälterhals (2.3) vorgesehenen Flansches (2.2) möglich ist.

10. Behandlungsmaschine nach Anspruch 4 und Anspruch 8 oder 9, **dadurch gekennzeichnet, dass** die Behälterträger (3a) derart höhenverstellbar sind, dass das in der Verschließposition befindliche Formatwechselelementes (5a) oder ein dort vorgesehenes Verschließelement (20) in Dichtlage gegen das betreffende Füllelement (17) angepresst anliegt.

11. Behandlungsmaschine für Flaschen oder dergleichen Behälter (2a, 2b) mit wenigstens einem Transportelement (1), mit mehreren am Transportelement (1) vorgesehenen Behandlungsstationen (21) mit Behälterträgern (3b), die jeweils für einen Formatwechsel durch wenigstens ein bewegliches Formatwechselelement (23) an unterschiedliche Behältergrößen und/oder Formen anpassbar sind, wobei das Formatwechselelement (23) mit einem den Formatwechsel bewirkenden Abschnitt (24, 25) zwischen einer aktiven und nicht aktiven Stellung bewegbar ist, und wobei der den Formatwechsel bewirkende Abschnitt (24, 25) in seiner nicht aktiven Stellung seitlich von einer Bewegungsbahn angeordnet ist, auf der sich die die Behälter (2a, 2b) tragenden Behälterträger (3b) bewegen, wobei
die Behälterträger (3b) die Behälter (2a, 2b) an einem Behälterbereich, beispielsweise an einem Behälterhals (2.3) unterhalb eines dortigen Flansches (2.2) gabelartig übergreifend ausgebildet sind,
**dadurch gekennzeichnet, dass**
das Formatwechselelement wenigstens eine um eine Achse gesteuert drehbare Wechselscheibe (23) ist, die an ihrem Umfang wenigstens zwei jeweils an unterschiedliche Behältergrößen und/oder -formen angepasste Behälteraufnahmen (24, 25) bildet, wobei
die Wechselscheibe (23) um eine Achse senkrecht zur Transportrichtung (A) des Transportelementes (1) oder parallel zu einer Drehachse des Transportelementes (1) drehbar ist, und wobei
Steuermittel zum gesteuerten Bewegen der Formatwechselelemente (5, 5a, 23) zumindest zwischen der aktiven und nicht aktiven Position von wenigstens einen an einem mit dem Transportelement (1) nicht bewegten Teil der Behandlungsmaschine vorgesehenen Schaltelement, beispielsweise in Form eines Schaltnockens (27) gebildet sind, und wobei das Schaltelement (27) ein gesteuertes Bewegen der Formatwechselelemente (23) bewirkt, wenn sich diese mit dem Transportelement (1) am Schaltelement vorbei bewegen.

12. Behandlungsmaschine nach Anspruch 11, **dadurch gekennzeichnet, dass** die Wechselscheibe (23) an einem Tragstück (22) des jeweiligen Behälterträgers (3b) drehbar vorgesehen ist.

## Claims

1. Treatment machine for bottles or the like containers (2a, 2b) with at least one transport element (1), which is configured as a rotor (1) which can be driven such as to circulate about a vertical machine axis (MA), with a plurality of treatment stations, (15) provided on the transport element (1), with container supports (3, 3a) which are configured such as to engage over the containers (2a, 2b) in a fork fashion with container receivers (4.1, 4a.1) formed at carrier pieces (4, 4a), in each case at a container region, for example at a container neck (2.3) beneath a flange (2.2) located there, and, for a change of format, can be adjusted to different container sizes and/or shapes,
wherein, for adjusting the respective container supports (3, 3a) to different container sizes and/or shapes, in each case a movable format change element (5, 5a) is provided, which can be moved with a section (5.1, 5a.1), which causes the format change, between an active and a non-active position, and for this purpose is configured such as to be movable, for example by being pushed, in an axial direction perpendicular to the direction of movement of the transport element and radially to the machine axis (MA), such that, in its non-active position, it is arranged laterally from a movement track, on which the container supports (3, 3a) carrying the containers (2a, 2b) move, wherein the section (5.1, 5a.1) which causes the format change of each container support (3, 3a), forms at its carrier piece (4, 4a), the container receiver (4.1, 4a.1) adjusted to a first container size and/or shape, and
the format change element (5, 5a), in the active state, adjusts this container receiver (4.1 4a.1) for the format change to a container size and/or shape which differs from the first container size and/or shape, and wherein the section of the format change element (5, 5a) causing the format change forms a container receiver (5.1, 5a.1), which is adjusted to a container size and/or shape which differs from the first, **characterised in that** the container receiver (5.1, 5a.1) of the format change element (5, 5a) in the active state is arranged inside the receiver (4.1, 4a.1) formed by the carrier piece (4, 4a), and/or overlaps this.

2. Treatment machine according to claim 1, **characterised in that** the container receiver (5.1, 5a.1) provided at the format change element (5, 5a) exhibits reduced dimensions in comparison with the container receiver (4.1, 4a.1) provided at the carrier piece (4, 4a), or, respectively, forms a receiver opening reduced in dimensions.

3. Treatment machine according to claim 1 or 2, **characterised in that** the format change element (5, 5a) is at lest one slide element which is guided such as to be pushed at the transport element (1) and/or at the container support (3, 3a) and/or at a carrier piece (4, 4a) located there.

4. Treatment machine according to any one of the preceding claims, **characterised in that**, with the configuration of the treatment stations (15) with in each case a filling element (17) for filling the containers (2a, 2b) with a liquid filling product, the respective format change element (5a) is configured as a closure element for closing the associated filling element (17) and/or a dispensing region of the filling element (17) in a cleaning and/or sterilization operation, e.g. chip cleaning or sterilization.

5. Treatment machine according to claim 4, **characterised in that** a closure cap or closure plate is formed at the format change element (5a).

6. Treatment machine according to any one of the preceding claims, **characterised by** control means (9, 14, 18) for the controlled movement of the format change elements (5, 5a) at least between the active and non-active position, preferably between the active, non-active, and closing position.

7. Treatment machine according to claim 6, **characterised in that** the control means for the controlled movement of the format change elements (5, 5a, 23) at least between the active and non-active position is formed by at least one switching element, provided at a part of the treatment machine which is not moved with the transport element (1), for example in the form of a switching curve (9), and that the switching element (9) causes a controlled movement of the format change elements (5, 5a) when this moves with the transport element (1) past the switching element.

8. Treatment machine according to any one of the preceding claims, **characterised in that** the container supports (3a) are provided together with the respective format change element (5a) such as to be height adjustable, for example controlled height adjustable, at the transport element (1).

9. Treatment machine according to claim 8, **characterised in that** the container supports (3a) are height adjustable in such a way that a format change is possible without a change in the height level of a container region which is important for the treatment, for example without change in the height level of the container mouth (2.1) and/or a flange (2.2) provided at a container neck (2.3).

10. Treatment machine according to claim 4 and claim 8 or 9, **characterised in that** the container supports (3a) are height adjustable in such a way that the format change element (5a) located in the closed position or a closure element (20) provided there is in contact pressed in a sealed position against the filling element (17) concerned.

11. Treatment machine for bottles or the like containers (2a, 2b) with at least one transport element (1), with a plurality of treatment stations (21), provided at the transport element (1), with container supports (3b) which can be adjusted in each case for a format change by at least one movable format change element (23) to different container sizes and/or shapes, wherein the format change element (23) can be moved with a section (24, 25) causing the format change between an active and a non-active position, and wherein the section (24, 25) causing the format change is arranged in its non-active position laterally from a container track, on which the container supports (3b) carrying the containers (2a, 2b) move, wherein
the container supports (3b) are configured such as to engage over the containers (2a, 2b) in fork fashion in a container region, for example at a container neck (2.3), beneath a flange (2.2) located there, **characterised in that**
the format change element is at least one change disk (23), which can be rotated in a controlled manner about an axis, which at its circumference forms at least two container receivers (24, 25) adjusted in each case to different container sizes and/or shapes, wherein
the change disk (23) can be rotated about an axis perpendicular to the transport direction (A) of the transport element (1) or parallel to a rotation axis of the transport element (1), and wherein
control means for the controlled movement of the format change elements (5, 5a, 23) at least between the active and non-active position are formed by at least one switching element provided at a part of the treatment machine which is not moved with the transport element (1), for example in the form of a switching cam (27), and wherein the switching element (27) causes a controlled movement of the format change elements (23) when these move with the transport element (1) past the switching element.

12. Treatment machine according to claim 11, **characterised in that** the change disk (23) is provided such as to be capable of rotating at a carrier piece (22) of the respective container support (3b).

## Revendications

1. Machine de manutention pour des bouteilles ou pour des contenants similaires (2a, 2b), comprenant au moins un élément de transport (1), qui est réalisé sous la forme d'un rotor (1) pouvant être entraîné en rotation autour d'un axe de machine (MA) vertical, comprenant plusieurs stations de manutention (15) prévues au niveau de l'élément de transport (1), pourvues de supports de contenant (3, 3a), qui sont réalisées de manière à saisir à la manière d'une fourche les contenants (2a, 2b) avec des logements de contenants (4.1, 4a.1) formés au niveau des pièces porteuses (4, 4a) respectivement au niveau d'une zone de contenant, par exemple au niveau d'un col de contenant (2.3) en dessous d'une bride (2.2) situées à cet endroit et qui peuvent être adaptées à des tailles de contenant et/ou à des formes différentes pour un changement de format,
dans laquelle est prévu, aux fins de l'adaptation du support de contenant (3, 3a) respectif à des tailles de contenant et/ou à des formes différentes, un élément de changement de format (5, 5a) mobile, qui peut être déplacé par une section (5.1, 5a.1) provoquant le changement de format entre une position active et une position non active et qui est réalisé à cet effet de manière mobile, en particulier de manière à pouvoir être déplacé par coulissement, dans une direction axiale de manière perpendiculaire par rapport à la direction de déplacement de l'élément de transport et de manière radiale en direction de l'axe de machine (MA) et qui est disposé dans sa position non active sur le côté d'une voie de déplacement, sur laquelle les supports de contenant (3, 3a) portant les contenants (2a, 2b) se déplacent, dans laquelle
chaque support de contenant (3, 3a) forme au niveau de sa pièce porteuse (4, 4a) le logement de contenant (4.1, 4a.1) adapté à une première taille et/ou forme de contenant,
et
l'élément de changement de format (5, 5a) adapte, dans l'état actif, ledit logement de contenant (4.1, 4a.1), pour le changement de format, à une taille et/ou à une forme de contenant différente de la première taille et/ou première forme de contenant, et dans laquelle la section, provoquant le changement de format, de l'élément de changement de format (5, 5a) forme un logement de contenant (5.1, 5a. 1), qui est adapté à une taille et/ou à une forme de contenant différentes de la première taille et/ou forme,
**caractérisée en ce que** le logement de contenant (5.1, 5a.1) de l'élément de changement de format (5, 5a) se trouvant dans l'état actif est disposé à l'intérieur du logement (4.1, 4a.1) formé par la pièce porteuse (4, 4a) et/ou est disposé de manière à la chevaucher.

2. Machine de manutention selon la revendication 1, **caractérisée en ce que** le logement de contenant (5.1, 5a.1) prévu au niveau de l'élément de changement de format (5, 5a) présente des dimensions réduites ou forme une ouverture de logement réduite dans ses dimensions par rapport au logement de support (4.1, 4a.1) prévu au niveau de la pièce porteuse (4, 4a).

3. Machine de manutention selon la revendication 1 ou 2, **caractérisée en ce que** l'élément de changement de format (5, 5a) est au moins un coulisseau guidé de manière à pouvoir être déplacé par coulissement au niveau de l'élément de transport (1) et/ou au niveau du support de contenant (3, 3a) et/ou au niveau de la pièce porteuse (4, 4a) située à cet endroit.

4. Machine de manutention selon l'une quelconque des revendications précédentes, **caractérisée en ce que** lors de la réalisation des stations de manutention (15) avec respectivement un élément de remplissage (17) servant à remplir les contenants (2a, 2b) d'un produit de remplissage liquide, l'élément de changement de format (5a) respectif est réalisé sous la forme d'un élément de fermeture servant à fermer l'élément de remplissage (17) associé et/ou sous la forme d'une zone de distribution de l'élément de remplissage (17) dans un mode de nettoyage et/ou de stérilisation, par exemple lors d'un nettoyage à puce ou d'une stérilisation à puce.

5. Machine de manutention selon la revendication 4, **caractérisée en ce qu'**un capuchon de fermeture ou une plaque de fermeture est réalisé(e) au niveau de l'élément de changement de format (5a).

6. Machine de manutention selon l'une quelconque des revendications précédentes, **caractérisée par** des moyens de commande (9, 14, 18) servant à déplacer de manière commandée les éléments de changement de format (5, 5a) au moins entre la position active et la position non active, de préférence entre la position active, la position non active et la position de fermeture.

7. Machine de manutention selon la revendication 6, **caractérisée en ce que** les moyens de commande servant à déplacer de manière commandée les éléments de changement de format (5, 5a, 23) au moins entre la position active et la position non active sont formés par au moins un élément de commutation prévu au niveau d'une partie, non déplacée avec l'élément de transport (1), de la machine de manutention, se présentant par exemple sous la forme d'une came de commutation (9), et **en ce que** l'élément de commutation (9) provoque un déplacement commandé des éléments de changement de format (5, 5a), lorsque ces derniers se déplacent avec l'élément de transport (1) le long de l'élément de commutation.

8. Machine de manutention selon l'une quelconque des revendications précédentes, **caractérisée en ce que** les supports de contenant (3a) sont prévus de manière à pouvoir être réglés en hauteur conjointement avec l'élément de changement de format (5a) respectif, par exemple de manière à pouvoir être réglés en hauteur de manière commandée au niveau de l'élément de transport (1).

9. Machine de manutention selon la revendication 8, **caractérisée en ce que** les supports de contenant (3a) peuvent être réglés en hauteur de telle manière qu'un changement de format est possible sans modifier le niveau en hauteur d'une zone de contenant essentielle pour la manutention, par exemple sans modifier le niveau en hauteur de l'embouchure de contenant (2.1) et/ou d'une bride (2.2) prévue au niveau d'un col de contenant (2.3).

10. Machine de manutention selon la revendication 4 et selon la revendication 8 ou 9, **caractérisée en ce que** les supports de contenant (3a) peuvent être réglés en hauteur de telle manière que l'élément de changement de format (5a) se trouvant dans la position de fermeture ou un élément de fermeture (20) prévu à cet endroit reposent de manière comprimée dans une position étanche contre l'élément de remplissage (17) concerné.

11. Machine de manutention pour des bouteilles ou des contenants (2a, 2b) similaires, comprenant au moins un élément de transport (1), comprenant plusieurs stations de manutention (21) prévues au niveau de l'élément de transport (1), pourvues de supports de contenant (3b), qui peuvent être adaptés respectivement pour un changement de format par au moins un élément de changement de format (23) mobile à des tailles de contenant et/ou à des formes différentes, dans laquelle l'élément de changement de format (23) peut être déplacé avec une section (24, 25) provoquant le changement de format, entre une position active et une position non active, et dans laquelle la section (24, 25) provoquant le changement de format est disposée, dans sa position non active, à côté d'une voie de déplacement, sur laquelle les supports de contenant (3b) portant les contenants (2a, 2b) se déplacent,
dans laquelle les supports de contenant (3b) sont réalisés de manière à saisir à la manière d'une fourche les contenants (2a, 2b) au niveau d'une zone de contenant, par exemple au niveau d'un col de contenant (2.3) en dessous d'une bride (2.2) située à cet endroit,
**caractérisée en ce**
**que** l'élément de changement de format est au moins un disque de changement (23) pouvant tourner de manière commandée autour d'un axe, lequel forme, au niveau de sa périphérie, au moins deux logements de contenant (24, 25) adaptés respectivement à des tailles et/ou formes de contenant différentes, dans laquelle
le disque de changement (23) peut tourner autour d'un axe de manière perpendiculaire par rapport à la direction de transport (A) de l'élément de transport (1) ou de manière parallèle par rapport à un axe de rotation de l'élément de transport (1), et dans laquelle
des moyens de commande servant à déplacer de manière commandée les éléments de changement de format (5, 5a, 23) au moins entre la position active et la position non active sont formés par au moins un élément de commutation prévu au niveau d'une partie, non déplacée avec l'élément de transport (1), de la machine de manutention, se présentant par exemple sous la forme d'un ergot de commutation (27), et dans laquelle l'élément de commutation (27) provoque un déplacement commandé des éléments de changement de format (23) lorsque ces derniers se déplacent le long de l'élément de commutation avec l'élément de transport (1).

12. Machine de manutention selon la revendication 11, **caractérisée en ce que** le disque de changement (23) est prévu de manière à pouvoir tourner au niveau d'une pièce porteuse (22) du support de contenant (3b) respectif.
